# EUROPEAN PATENT APPLICATION

(11) **EP 4 610 050 A1**
(43) Date of publication of application: **03.09.2025**
(21) Application number: 23882195.3
(22) Date of filing: 08.08.2023
(51) Int. Cl.: B41J 2/01, B41M 5/00, C09D 11/30

(54) **POWDER DEPOSITION PRINTING METHOD**

(30) Priority: 26.10.2022 JP 2022171683
(71) Applicant: Sakata INX Corporation, Osaka-shi, Osaka 550-0002 (JP)
(72) Inventor: SHIOZAKI, Daigo, Osaka-shi, Osaka 550-0002 (JP); NITTA, Ryoichi, Osaka-shi, Osaka 550-0002 (JP); NAKASHIMA, Okinori, Osaka-shi, Osaka 550-0002 (JP)
(74) Representative: Müller-Boré & Partner Patentanwälte PartG mbB
(86) International application number: PCT/JP2023/028968
(87) International publication number: WO 2024/089979

(57) **Abstract**

An object is to form a layer excellent in terms of aesthetic appearance or the like more efficiently using an active-energy-ray-curable inkjet ink composition for any fine pattern by causing a powder such as a luster powder to adhere to a cured surface thereof. As a solution,
provided is a method for obtaining a powder adhesion printed material by causing a powder to adhere to a portion printed with an adhesive active-energy-ray-curable inkjet ink composition, wherein
the adhesive active-energy-ray-curable inkjet ink composition contains 50.0% to 85.0% by mass of a monofunctional monomer having a hydroxy group and having a Tg of 0°C or lower,
the adhesive active-energy-ray-curable inkjet ink composition contains 0.5% to 25.0% by mass of a difunctional acrylate oligomer including an amine-modified photopolymerizable oligomer, and
the adhesive active-energy-ray-curable inkjet ink composition has a viscosity at 25°C of 50 mPa·s or less and a surface tension at 25°C of 32.0 mN/m or less,
the method including, in order, the following steps (A) to (C).
step (A): a step of ejecting the adhesive active-energy-ray-curable inkjet ink composition from an inkjet printing apparatus onto a substrate to form an adhesive active-energy-ray-curable inkjet ink composition layer
step (B): a step of irradiating the adhesive active-energy-ray-curable inkjet ink composition layer formed in step (A) with an active energy ray to cure the ink composition layer
step (C): a step of sprinkling a powder over the cured ink composition layer obtained in step (B) to cause the powder to adhere to the adhesive active-energy-ray-curable inkjet ink composition layer, thereby obtaining a powder adhesion printed material

## Description

### Technical Field

The present invention relates to a method for obtaining a powder adhesion printed material by causing a powder to adhere to a cured adhesive active-energy-ray-curable inkjet ink composition layer, and also to an adhesive active-energy-ray-curable inkjet ink composition.

### Background Art

As described in PTL 1, it is known that a liquid adhesive is applied to an object to be decorated and a powder such as a metal powder is caused to adhere to this adhesive layer. As described in PTL 2, it is known that an adhesive composition is caused to adhere to a surface of a recording medium by an inkjet method and a sheet on which a luster film is formed is laminated thereon to transfer the luster film. As described in PTL 3, it is known that a luster ink is ejected onto a recording medium by an inkjet method to obtain an image or the like that has a luster.

Furthermore, as described in PTL 4, it is known that an adhesive is applied by an inkjet printer.

### Citation List

### Patent Literature

PTL 1: Japanese Unexamined Patent Application Publication No. 2003-341298
PTL 2: Japanese Unexamined Patent Application Publication No. 2013-173289
PTL 3: Japanese Unexamined Patent Application Publication No. 2021-024244
PTL 4: Japanese Unexamined Patent Application Publication No. 2016-186328

### Summary of Invention

### Technical Problem

When a layer made of liquid adhesive is formed on a substrate and a metal layer is formed on the surface of the adhesive layer while the adhesive layer still contains solvent, the removal of the solvent during drying might not proceed smoothly due to the presence of the metal layer.

As is obvious from the known matters described above, it is known that a luster ink is ejected onto a recording medium by an inkjet method to obtain a pattern or the like that has a luster on the substrate. However, in particular, when an ink composition containing a luster powder in advance is printed by an inkjet method, the size of the luster powder contained is limited because an inkjet printing apparatus essentially uses an extremely small nozzle, and even a powder with a slightly large size tends to cause nozzle clogging. In particular, in printing using a piezoelectric inkjet head, which essentially allows high-definition printing, the powder that can be added to the ink is limited to one with an extremely small size because the nozzle diameter is generally small. As a result, when a design is printed with a pearl pigment, aluminum flakes, or the like, only a pigment with a small size can be used, and a wider range of designs cannot be printed.

Furthermore, according to PTL 4 above, in which an adhesive is applied by an inkjet printer, the adhesive is applied to a gasket plate, and fine coating is not intended.

Accordingly, an object is to form a layer excellent in terms of aesthetic appearance or the like more efficiently using an active-energy-ray-curable inkjet ink composition for any fine pattern by causing a powder such as a luster powder to adhere to a cured surface thereof.

### Solution to Problem

The inventors have found that the above object can be achieved by the following configurations and have made the following invention.
1. A method for obtaining a powder adhesion printed material by causing a powder to adhere to a portion printed with an adhesive active-energy-ray-curable inkjet ink composition, wherein
   the adhesive active-energy-ray-curable inkjet ink composition contains 50.0% to 85.0% by mass of a monofunctional monomer having a hydroxy group and having a Tg of 0°C or lower,
   the adhesive active-energy-ray-curable inkjet ink composition contains 0.5% to 25.0% by mass of a difunctional acrylate oligomer including an amine-modified photopolymerizable oligomer, and
   the adhesive active-energy-ray-curable inkjet ink composition has a viscosity at 25°C of 50 mPa ·s or less and a surface tension at 25°C of 32.0 mN/m or less,
   the method including, in order, the following steps (A) to (C).
   step (A): a step of ejecting the adhesive active-energy-ray-curable inkjet ink composition from an inkjet printing apparatus onto a substrate to form an adhesive active-energy-ray-curable inkjet ink composition layer
   step (B): a step of irradiating the adhesive active-energy-ray-curable inkjet ink composition layer formed in step (A) with an active energy ray to cure the ink composition layer
   step (C): a step of sprinkling a powder over the cured ink composition layer obtained in step (B) to cause the powder to adhere to the adhesive active-energy-ray-curable
   inkjet ink composition layer, thereby obtaining a powder adhesion printed material
2. The method for obtaining a powder adhesion printed material by causing a powder to adhere to a printed portion according to 1, including, as step (D) after step (C), a step of removing powder that has not adhered to a surface of the cured ink composition layer from a surface of the substrate layer.
3. The method for obtaining a powder adhesion printed material by causing a powder to adhere to a printed portion according to 1 or 2, wherein the active energy ray used in step (B) is light emitted from a light-emitting diode as a light source and having a wavelength of 360 to 420 nm.
4. The method for obtaining a powder adhesion printed material by causing a powder to adhere to a printed portion according to 2 or 3, including, as step (E) after step (D), a step of applying an overcoat layer composition to the cured ink composition layer to which the powder has adhered.
5. The method for obtaining a powder adhesion printed material by causing a powder to adhere to a printed portion according to 2, wherein the powder removed in step (D) is collected and reused in step (C).
6. The method for obtaining a powder adhesion printed material by causing a powder to adhere to a printed portion according to any one of 1 to 5, wherein the powder in step (C) is solid at room temperature.
7. The method for obtaining a powder adhesion printed material according to any one of 2 to 6, wherein a step of UV irradiation with a metal halide lamp is performed after step (D).
8. An adhesive active-energy-ray-curable inkjet ink composition, wherein
   the adhesive active-energy-ray-curable inkjet ink composition contains 50.0% to 85.0% by mass of a monofunctional monomer having a hydroxy group and having a Tg of 0°C or lower,
   the adhesive active-energy-ray-curable inkjet ink composition contains 0.5% to 25.0% by mass of a difunctional acrylate oligomer including an amine-modified photopolymerizable oligomer, and
   the adhesive active-energy-ray-curable inkjet ink composition has a viscosity at 25°C of 50 mPa ·s or less and a surface tension at 25°C of 32.0 mN/m or less.
9. The adhesive active-energy-ray-curable inkjet ink composition according to 8, wherein
   the adhesive active-energy-ray-curable inkjet ink composition contains less than 30.0% by mass of a monofunctional monomer having a Tg of 70°C or higher, and
   the adhesive active-energy-ray-curable inkjet ink composition contains less than 25.0% by mass of a polyfunctional acrylate monomer having a molecular weight of less than 400.

### Advantageous Effects of Invention

According to the present invention, an adhesive active-energy-ray-curable inkjet ink composition that exhibits excellent curability and that maintains its stickiness after curing can be used. In addition, although the cured coating has stickiness, powder adhesion is not adversely affected by deformation or detachment of the adhesive layer in the step of fixing the powder by adhesion or the step of collecting the powder. After the ink is ejected to any portion of the material to be printed under optimum conditions and is subjected to UV curing, digital printing decoration with various powders can be performed in post-processing by directly applying a powdered component irrespective of whether its particle size is large or small. Furthermore, since the powder adheres to the surface of the adhesive layer of the printed portion, the characteristics such as color and brightness of the powder can be more accurately reproduced. In addition, a combination of powder adhesion with a solvent-free adhesive provides the advantageous effect that there is no situation in which a surface layer made of powder hinders drying when a solvent-containing adhesive is dried to evaporate the solvent.

### Description of Embodiments

The present invention is a method for causing a powder to adhere to a portion printed with a particular adhesive active-energy-ray-curable inkjet ink composition and is a method including, in order, the following steps (A), (B), and (C).

The adhesive active-energy-ray-curable inkjet ink composition in the present invention may be hereinafter simply referred to as "ink composition".

### <Step (A)>

Step (A) in the present invention is a step of ejecting the adhesive active-energy-ray-curable inkjet ink composition from an inkjet printing apparatus onto a substrate to form an adhesive active-energy-ray-curable inkjet ink composition layer.

The adhesive active-energy-ray-curable inkjet ink composition in step (A) is a particular ink composition that cures and has adhesiveness.

The inkjet printing apparatus used in this step may be an inkjet printing apparatus including a piezoelectric nozzle or a thermal nozzle. An inkjet printing apparatus including a piezoelectric nozzle is preferred for finer printing.

The printing conditions (e.g., printing speed) for such inkjet printing apparatuses are not particularly limited and can be set to any conditions depending on the physical properties of the ink composition and the properties of the substrate.

The substrate to be printed is not particularly limited as long as the present invention can provide its advantageous effects when a powder is caused to adhere thereto. For example, the substrate is not particularly limited as long as the active-energy-ray-curable inkjet ink composition is applicable thereto. The substrate may be, for example, a plastic, paper, a capsule, a gel, metal foil, glass, wood, or fabric. The plastic for the substrate may be one or more types selected from the group consisting of polyester-based polymers (e.g., polyethylene terephthalate (PET) and polyethylene naphthalate), cellulose-based polymers (e.g., diacetylcellulose and triacetylcellulose (TAC)), polycarbonate-based polymers, polyacrylic-based polymers (e.g., polymethyl methacrylate), vinyl chloride-based polymers, polyolefin-based polymers (e.g., polyethylene, polypropylene, polyolefin polymers having a cyclic or norbornene structure, and ethylene·propylene copolymer polymers), polyamide-based polymers (e.g., nylon and aromatic polyamide polymers), polystyrene-based polymers (e.g., polystyrene and acrylonitrile·styrene copolymer polymers), polyimide-based polymers, polysulfone-based polymers, polyethersulfone-based polymers, polyetherketone-based polymers, polyphenyl sulfide-based polymers, polyvinyl alcohol-based polymers, polyvinylidene chloride-based polymers, polyvinyl butyral-based polymers, polyarylate-based polymer, polyoxymethylene-based polymers, polyepoxy-based polymers, blends of these polymers, and the like.

### <Adhesive Active-Energy-Ray-Curable Inkjet Ink Composition>

The ink composition used in the present invention has the following composition.

The adhesive active-energy-ray-curable inkjet ink composition contains a monofunctional monomer having a hydroxy group and having a Tg (glass transition temperature) of 0°C or lower in an amount of 50.0% by mass or more, preferably 53.0% by mass or more, more preferably 58.0% by mass or more, even more preferably 61.0% by mass or more, and 85.0% by mass or less, preferably 80.0% by mass or less, more preferably 78.0% by mass or less, even more preferably 75.0% by mass or less.

The adhesive active-energy-ray-curable inkjet ink composition contains a difunctional acrylate oligomer including an amine-modified photopolymerizable oligomer in an amount of 0.5% by mass or more, preferably 5.0% by mass or more, more preferably 8.0% by mass or more, and 25.0% by mass or less, preferably 20.0% by mass or less, more preferably 15.0% by mass or less.

When ultraviolet light (UV lamp (e.g., a metal halide)) or ultraviolet light (light-emitting diode (LED)) is used as a light source, the content of a photopolymerization initiator in the adhesive active-energy-ray-curable inkjet ink composition may be 0% by mass, but preferably 0.5% by mass or more, more preferably 5.0% by mass or more, and preferably 15.0% by mass or less, more preferably 10.0% by mass or less.

The adhesive active-energy-ray-curable inkjet ink composition has a viscosity at 25°C of 50.0 mPa ·s or less, preferably 35.0 mPa ·s or less, more preferably 30.0 mPa ·s or less, even more preferably 25.0 mPa ·s or less, and preferably 10.0 mPa ·s or more, more preferably 13.0 mPa ·s or more.

The adhesive active-energy-ray-curable inkjet ink composition has a surface tension at 25°C of 32.0 mN/m or less, preferably 28.0 mN/m or less, more preferably 25.0 mN/m or less, and preferably 15.0 mN/m or more, more preferably 18.0 mN/m or more, even more preferably 20.0 mN/m or more.

### <Step (B)>

The ink composition layer formed in step (A) above is cured in this step. The active energy ray curable with which the ink composition layer is irradiated for curing may be, for example, ultraviolet light (the light source is a metal halide lamp, an LED, or the like) or an electron beam. In particular, the light source is preferably a metal halide lamp or an LED.

The conditions for irradiation with the active energy ray are not particularly limited, and irradiation is preferably performed such that the formed ink composition layer cures and has adhesiveness.

When curing is performed by irradiation with ultraviolet light, its wavelength is preferably 360 nm or more, more preferably 380 nm or more, even more preferably 390 nm or more, and is preferably 420 nm or less, more preferably 410 nm or less.

As the irradiation intensity required for curing, the integrated light intensity for curing with a metal halide lamp is preferably 75 mJ/cm² or more, more preferably 100 mJ/cm² or more, even more preferably 120 mJ/cm² or more. Light from a metal halide lamp is composed of a wide range of wavelengths. Accordingly, the integrated light intensity includes those at wavelengths that do not significantly contribute to curing, and therefore, the integrated light intensity required for curing tends to be higher.

On the other hand, the integrated light intensity for curing by irradiation with an LED lamp is preferably 60 mJ/cm² or more, more preferably 75 mJ/cm² or more, even more preferably 85 mJ/cm² or more. The use of an LED lamp with a suitable wavelength selected for curing the adhesive active-energy-ray-curable inkjet ink composition allows sufficient curing even when the integrated light intensity of the energy ray is relatively low.

### <Step (C)>

In step (C), any powder selected to obtain the intended appearance is sprinkled over the ink composition layer cured in step (B) to cause the powder to adhere to the cured ink composition layer.

Here, sprinkling is a step of sprinkling one or more types of powders described below by any means toward the surface of the cured ink composition layer formed on the surface of the substrate. This sprinkling step may be performed multiple times, and a different powder may be sprinkled for each sprinkling operation. In addition, a different powder may be sprinkled over each region of the surface of the cured ink composition layer.

As the mode of sprinkling, for example, while a substrate such as a sheet-like substrate having a cured ink composition layer thereon is placed on a base or the like or transported on a conveyor such that the cured ink composition layer faces upward, any amount of powder may be sprinkled over any area by any sprinkling unit disposed above the substrate. In addition, while a sheet-like substrate having a cured ink composition layer thereon is maintained such that the cured ink composition layer is perpendicular to a horizontal plane, a powder may be sprinkled over a perpendicular surface thereof by any sprinkling means. Furthermore, while a sheet-like substrate having a cured ink composition layer thereon is maintained such that the cured ink composition layer faces downward, a powder may be sprinkled (ejected) upward from therebelow.

The powder used is preferably solid at room temperature (25°C). If the powder is not solid at room temperature, the powder may be, for example, encapsulated in advance.

During sprinkling, any powder may be sprinkled such that the powder can adhere to the entire surface of the cured ink composition layer without gaps. In addition, any powder may be sprinkled such that the powder adheres to the surface of the cured ink composition layer to an extent that leaves gaps in the powder through which the ink composition layer can be seen in its appearance. If the ink composition layer can be observed through the gaps in the powder, the combination of the color and the like of the ink composition layer with the color and the like of the powder can provide an excellent appearance.

Here, adhesion refers to a state in which a powder is fixed to the cured ink composition layer with sufficient adhesion strength.

As the powder sprinkled and caused to adhere to the ink composition layer, any powder such as a powder for addition as a pigment to an ink composition or a coating composition can be used.

As the powder, any powder can be used depending on the properties, pattern, and appearance of the resulting article. The powder may be an inorganic powder such as a metal, carbon, an inorganic compound, an inorganic pigment, glass, or a ceramic, or may be an organic powder such as a resin, paper, or an organic pigment. The powder may have any shape, such as a spherical shape, an oval shape, a needle shape, a plate shape, a foil shape, or an irregular shape. The form of the powder, such as a solid powder, a porous powder, or a hollow powder, is also not particularly limited. The size of the powder is also not particularly limited. Examples of such powders include pearl pigments, aluminum flakes, phosphorescent pigments, and fluorescent pigments

Furthermore, the powder may be a powder containing an agent that exhibits activity as an attractant, a repellent, a biocide, or the like for a poikilotherm or a homeotherm, an agent that exhibits activity as a growth promotant, a herbicide, or the like for a plant or the like, or a powder having electrical properties, magnetic properties, or the like or containing a diagnostic reagent, a medicine, or the like.

### <Step (D)>

A step of removing powder that has not adhered to the surface of the cured ink composition layer from the surface of the substrate layer is performed if necessary while leaving powder that has, for example, adhered to the surface of the cured ink composition layer in step (C) in the present invention.

"Adhered" for the powder that has, for example, adhered to the surface of the cured ink composition layer refers to a state in which the powder has subsequently been sufficiently fixed to the surface of the cured ink composition layer, whereas "not adhered" refers to a state in which the powder is readily removed in step (D) because, for example, the powder has not been sufficiently fixed to the surface of the cured ink composition layer and is in direct contact with the surface of the substrate layer.

In step (D), such powder that has "not adhered" is removed. In addition, powder that is in contact with the surface of the cured ink composition layer but is in weak contact therewith and cannot be said to have "adhered" thereto may also be removed in this step.

The device that can be used to remove the powder in step (D) may be an ejection device that ejects airflow toward the surface side of the substrate to which the powder has adhered from a blower or the like disposed on a line perpendicular to the surface of the substrate or obliquely thereabove to remove the powder, or may be a suction device that takes in airflow with a suction unit disposed on a line perpendicular to the surface of the substrate or obliquely thereabove to take in the powder together with air and the like by its suction force.

Furthermore, in at least one of the periods during, before, and/or after the process of removing the powder by such an ejection device or suction device, the entire substrate may be vibrated to cause the powder to fall off or remove at least powder that has not sufficiently adhered from the surface of the cured ink composition layer.

The powder to be removed may also be removed with a rubber spatula, a brush, or the like.

In step (D), the substrate having the cured ink composition layer and the powder on one surface thereof may be disposed such that the one surface faces upward, may be disposed such that the one surface is, for example, perpendicular to a horizontal plane, or may be disposed such that the one surface faces downward. For example, if the substrate is disposed such that the one surface is perpendicular to a horizontal plane or faces downward, some powder that has not "adhered" may fall off due to its own weight.

The thus-removed powder may be collected by known means and may be reused or subjected to certain processing.

Accordingly, when the powder that has not adhered to the surface of the cured ink composition layer is removed therefrom by the above ejection device or suction device in step (D), a trap, a mesh-like material, or a fabric-like material for collecting the powder may be provided downstream of the airflow carrying the removed powder to collect the powder. The collected powder may be circulated to step (C) above and may be sprinkled over the cured ink composition layer if necessary.

### <Step (E)>

In step (E), which may be employed in the present invention, an overcoat layer composition may be applied to the surface of the cured ink composition layer to which the powder has adhered, to the entire surface including the surface of the cured ink composition layer to which the powder has adhered, and/or to part of the entire surface. This overcoat layer composition needs to have sufficient adhesiveness to the substrate, to the surface of the cured ink composition layer, and to the powder.

The application of the overcoat layer composition includes coloration by printing with any printing ink composition and the application of an overcoat varnish composition. Alternatively, such application may be omitted, and printing or application of such compositions may be omitted.

The printing ink composition may have high concealing power with any colorant (sufficient concealing power to make the powder that has adhered visually unobservable after printing) or may have low concealing power. The overcoat varnish composition may be colorless and transparent or may be colored with any colorant while remaining transparent. The printing ink composition having high concealing power is preferably printed on part of the surface of the cured ink composition layer to which the powder has adhered.

As such overcoat layer compositions, known overcoat layer compositions such as active-energy-ray-curable compositions, water-based resin compositions, and oil-based resin compositions can be used. However, it is necessary that such overcoat layer compositions do not dissolve or alter the cured adhesive active-energy-ray-curable inkjet ink composition or the powder that has adhered thereto so that they do not impair the advantageous effects of printing with the printing ink composition layer and powder adhesion in the present invention.

In this way, coloration with the printing ink composition or the formation of the overcoat varnish composition layer as the overcoat layer composition allows decoration, protection, or the like of the cured ink composition layer and the powder. For example, if powder adhesion provides an aesthetic effect, the overcoat layer composition can provide the advantageous effect that the aesthetic appearance can be maintained.

In view of the above-described matters related to the powder, it is not preferred in some cases to apply the overcoat layer composition to the surface including the surface of the cured ink composition layer, for example, if the advantageous effects are provided when the powder is located at the outermost surface, for example, as in the case of a powder containing an agent that exhibits activity as an attractant, a repellent, a biocide, or the like for a poikilotherm or a homeotherm or an agent that exhibits activity as a growth promotant, a herbicide, or the like for a plant or the like.

### <Adhesive Active-Energy-Ray-Curable Inkjet Ink Composition in Invention>

The individual components of the adhesive active-energy-ray-curable inkjet ink composition in the present invention will be described below. The individual compounds described below can be included in a plurality of categories of components described below. In this case, such compounds are regarded as belonging to the individual categories. (Monofunctional Monomer Having Hydroxy Group and Having Tg of 0°C or Lower)

The monofunctional monomer having a hydroxy group and having a Tg of 0°C or lower that can be used in the present invention may be, for example, hydroxyethyl acrylate (Tg = - 15°C), hydroxypropyl acrylate (Tg = -7°C), 2-hydroxybutyl acrylate (Tg = -7°C), or 4-hydroxybutyl acrylate (Tg = - 40°C) .

### (Other Monofunctional Monomers)

The ink composition of the present invention may contain other monofunctional monomers. Such monofunctional monomers may have a Tg of 0°C or lower or may have a Tg of higher than 0°C.

In the present specification, "(meth)acrylate" includes both "acrylate" and "methacrylate".

Other monofunctional monomers include monofunctional monomers that are not "monofunctional monomers having a hydroxy group and having a Tg of 0°C or lower". Examples of such monomers include alkyl (meth)acrylate-based compounds, hydroxy group-containing (meth)acrylate-based compounds having a Tg of higher than 0°C, halogen-containing (meth)acrylate-based compounds, ether group-containing (meth)acrylate-based compounds, carboxyl group-containing (meth)acrylate-based compounds, and other (meth)acrylate-based compounds.

In addition, a monofunctional monomer having a Tg of 70°C or higher is preferably selected from the following monofunctional monomers and contained in the adhesive active-energy-ray-curable inkjet ink composition in an amount of less than 30.0% by mass, although the monofunctional monomer having a Tg of 70°C or higher need not be contained. When the monofunctional monomer having a Tg of 70°C or higher is contained, it is more preferably contained in an amount of 25.0% by mass or less, even more preferably 20.0% by mass or less. Examples of such monofunctional monomers having a Tg of 70°C or higher include methyl methacrylate (Tg = 105°C), isobornyl acrylate (Tg = 94°C), isobornyl methacrylate (Tg = 180°C), acryloylmorpholine (Tg = 145°C), dimethylacrylamide (Tg = 119°C), acrylonitrile (Tg = 104°C), acrylamide (Tg = 165°C), N,N-dimethylaminopropylacrylamide (Tg = 134°C), acrylic acid (Tg = 106°C), methacrylic acid (Tg = 228°C), itaconic acid (Tg = 100°C), and styrene (Tg = 100°C).

### -Alkyl (Meth)acrylate-Based Compound-

Examples of alkyl (meth)acrylate-based compounds include methyl (meth)acrylate, ethyl (meth)acrylate, propyl (meth)acrylate, isopropyl (meth)acrylate, n-butyl (meth)acrylate, i-butyl (meth)acrylate, t-butyl (meth)acrylate, amyl (meth)acrylate, isoamyl (meth)acrylate, hexyl (meth)acrylate, 2-ethylhexyl (meth)acrylate, n-octyl (meth)acrylate, isooctyl (meth)acrylate, (meth)nonyl acrylate, iso(meth)nonyl acrylate, decyl (meth)acrylate, isodecyl (meth)acrylate, dodecyl (meth)acrylate, isooctyl (meth)acrylate, lauryl (meth)acrylate, stearyl (meth)acrylate, isostearyl (meth)acrylate, isomyristyl (meth)acrylate, octadecyl (meth)acrylate, dicyclopentanyl (meth)acrylate, tridecyl (meth)acrylate, nonyl (meth)acrylate, hexadecyl (meth)acrylate, myristyl (meth)acrylate, isobornyl (meth)acrylate, cyclohexyl (meth)acrylate, norbornyl (meth)acrylate, dicyclopentenyl (meth)acrylate, dicyclopentenyloxyethyl (meth)acrylate, 1-adamantyl (meth)acrylate, 3,5,5-trimethylcyclohexyl (meth)acrylate, and 4-t-butylcyclohexyl (meth)acrylate.

Among these alkyl (meth)acrylate-based compounds, n-octyl acrylate (Tg = -65°C), lauryl acrylate (Tg = -23°C), isodecyl acrylate (Tg = -62°C), isononyl acrylate (Tg = - 58°C), nonyl acrylate (Tg = -37°C), stearyl acrylate (Tg = 30°C), and isostearyl acrylate (Tg = -18°C) may be contained.

### -Hydroxy Group-Containing (Meth)acrylate-Based Compounds Having Tg of Higher Than 0°C-

Examples of such hydroxy group-containing (meth)acrylate-based compounds include the following compounds excluding the above monofunctional monomers having a Tg of 0°C or lower. Among the following compounds, those having a Tg of 0°C or lower are regarded as monofunctional monomers having a Tg of 0°C or lower and are not regarded here as hydroxy group-containing (meth)acrylate-based compounds.

Examples of hydroxy group-containing (meth)acrylate-based compounds include hydroxymethyl (meth)acrylate, 2-hydroxyethyl (meth)acrylate, 2-hydroxypropyl (meth)acrylate, 3-hydroxypropyl (meth)acrylate, 2-hydroxybutyl (meth)acrylate, 4-hydroxybutyl (meth)acrylate, hydroxypentyl (meth)acrylate, 2-hydroxy-3-methoxypropyl (meth)acrylate, 2-hydroxy-3-butoxypropyl (meth)acrylate, diethylene glycol mono(meth)acrylate, triethylene glycol mono(meth)acrylate, polyethylene glycol mono(meth)acrylate, dipropylene glycol mono(meth)acrylate, polypropylene glycol mono(meth)acrylate, 1,6-hexanediol mono(meth)acrylate, glycerol mono(meth)acrylate, 2-hydroxy-3-chloropropyl (meth)acrylate, 2-hydroxy-3-phenoxypropyl (meth)acrylate, 2-hydroxy-3-allyloxypropyl (meth)acrylate, 2-(meth)acryloyloxyethyl-2-hydroxypropyl phthalate, and (poly)alkylene glycol-modified (meth)acrylates such as 2-ethylhexyl EO-modified (meth)acrylate, o-phenylphenol EO-modified (meth)acrylate, p-cumylphenol EO-modified (meth)acrylate, and nonylphenol EO-modified (meth)acrylate.

### -Halogen-Containing (Meth)acrylate-Based Compound-

Examples of halogen-containing (meth)acrylate-based compounds include trifluoromethyl (meth)acrylate, 2,2,2-trifluoroethyl (meth)acrylate, 2,2,3,3-tetrafluoropropyl (meth)acrylate, 1H-hexafluoroisopropyl (meth)acrylate, 1H,1H,5H-octafluoropentyl (meth)acrylate, 1H,1H,2H,2H-heptadecafluorodecyl (meth)acrylate, 2,6-dibromo-4-butylphenyl (meth)acrylate, 2,4,6-tribromophenoxyethyl (meth)acrylate, and 2,4,6-tribromophenol 3EO (ethylene oxide)-added (meth)acrylate.

### -Ether Group-Containing (Meth)acrylate-Based Compound-

Examples of ether group-containing (meth)acrylate-based compounds include alkoxy-based and/or phenoxy-based (meth)acrylates such as 1,3-butylene glycol methyl ether (meth)acrylate, methoxytriethylene glycol (meth)acrylate, methoxydipropylene glycol (meth)acrylate, methoxytripropylene glycol (meth)acrylate, methoxypolypropylene glycol (meth)acrylate, ethoxydiethylene glycol (meth)acrylate, ethylcarbitol (meth)acrylate, 2-ethylhexylcarbitol (meth)acrylate, tetrahydrofurfuryl (meth)acrylate, cresylpolyethylene glycol (meth)acrylate, 2-(vinyloxyethoxy)ethyl (meth)acrylate, phenoxyethyl (meth)acrylate, p-nonylphenoxyethyl (meth)acrylate, p-nonylphenoxypolyethylene glycol (meth)acrylate, glycidyl (meth)acrylate, phenoxydiethylene glycol (meth)acrylate, phenoxy-polyethylene glycol (meth)acrylate, hexaethylene glycol monophenyl ether mono(meth)acrylate, diethylene glycol monobutyl ether acrylate, dipropylene glycol monomethyl ether (meth)acrylate, 3-methoxybutyl (meth)acrylate, methoxydiethylene glycol (meth)acrylate, methoxypropylene glycol (meth)acrylate, methoxypolyethylene glycol (meth)acrylate (number of EO repeating units = e.g., 400 or 700), 2-(2-ethoxyethoxy)ethyl (meth)acrylate, 2-ethoxyethyl (meth)acrylate, 2-methoxyethyl (meth)acrylate, 3-methoxybutyl acrylate, ethoxyethyl (meth)acrylate, ethoxyethoxyethyl (meth)acrylate, butoxyethyl (meth)acrylate, alkoxylated 2-phenoxyethyl (meth)acrylates (e.g., ethoxylated 2-phenoxyethyl (meth)acrylate and propoxylated 2-phenoxyethyl (meth)acrylate), alkoxylated nonylphenyl (meth)acrylates (e.g., ethoxylated (4) nonylphenol (meth)acrylate), 2-phenoxyethyl (meth)acrylate, paracumylphenoxyethylene glycol (meth)acrylate, methylphenoxyethyl (meth)acrylate, ethoxylated succinic acid (meth)acrylate, ethoxylated tribromophenyl (meth)acrylate, and ethoxylated nonylphenyl (meth)acrylate.

### -Carboxyl Group-Containing (Meth)acrylate-Based Compound-

Examples of carboxyl group-containing (meth)acrylate-based compounds include β-carboxyethyl (meth)acrylate, succinic acid monoacryloyloxyethyl ester, ω-carboxypolycaprolactone mono(meth)acrylate, 2-(meth)acryloyloxyethyl hydrogen phthalate, 2-(meth)acryloyloxypropyl hydrogen phthalate, 2-(meth)acryloyloxypropyl hexahydrohydrogen phthalate, and 2-(meth)acryloyloxypropyl tetrahydrohydrogen phthalate.

### -Other (Meth)acrylate-Based Compounds-

Examples of other (meth)acrylate-based compounds include benzyl (meth)acrylate, N,N-dimethylaminoethyl (meth)acrylate, N,N-dimethylaminopropyl (meth)acrylate, morpholinoethyl (meth)acrylate, trimethylsiloxyethyl (meth)acrylate, diphenyl-2-(meth)acryloyloxyethyl phosphate, 2-(meth)acryloyloxyethyl acid phosphate, caprolactone-modified 2-(meth)acryloyloxyethyl acid phosphate, 2-hydroxy-1-(meth)acryloxy-3-methacryloxypropane, (meth)acryloyloxyethyl phthalate, 2-(meth)acryloyloxyethyl-2-hydroxyethyl phthalate, 2-(meth)acryloyloxypropyl phthalate, tricyclodecane monomethylol (meth)acrylate, (meth)acrylic acid dimer, diethylaminoethyl (meth)acrylate, 2-(meth)acryloyloxyethylsuccinic acid, 2-(meth)acryloyloxyethylhexahydrophthalic acid, 2-ethylhexyl-diglycol (meth)acrylate, aminoethyl (meth)acrylate, ethylcarbitol (meth)acrylate, ethyl diglycol (meth)acrylate, dimethylaminoethyl (meth)acrylate benzyl chloride quaternary salt, tribromophenyl (meth)acrylate, 1,4-cyclohexanedimethanol mono(meth)acrylate, cresol (meth)acrylate, trimethylolpropane formal (meth)acrylate, neopentyl glycol (meth)acrylate benzoic acid ester, (2-methyl-2-ethyl-1,3-dioxolan-4-yl)methyl (meth)acrylate, 1-(meth)acryloylpiperidin-2-one, 1,4-dioxaspiro[4,5]dec-2-ylmethyl 2-(meth)acrylate, N-(meth)acryloyloxyethylhexahydrophthalimide, γ-butyrolactone (meth)acrylate, caprolactone-modified tetrahydrofurfuryl (meth)acrylate, imide (meth)acrylate, vinyl (meth)acrylate, and maleimide.

Other examples include acryloylmorpholine (Tg = 145°C), dimethylacrylamide (Tg = 119°C), hydroxyethylacrylamide (Tg = 98°C), isopropylacrylamide (Tg = 134°C), diethylacrylamide (Tg = 81°C), and dimethylaminopropylacrylamide (Tg = 134°C).

### (Polyfunctional Polymerizable Compound)

As polyfunctional polymerizable compounds (compounds having two or more unsaturated bonds), for example, the following polyfunctional (meth)acrylate-based compounds and vinyl ether group-containing (meth)acrylate-based compounds can be used.

In particular, the adhesive active-energy-ray-curable inkjet ink composition preferably contains less than 25.0% by mass of a polyfunctional acrylate monomer having a molecular weight of less than 400.

### -Polyfunctional (Meth)acrylate-Based Compound-

Examples of polyfunctional (meth)acrylate-based compounds that can be used include difunctional monomers, including ethylene glycol di(meth)acrylate, polyethylene glycol di(meth)acrylates such as diethylene glycol di(meth)acrylate, triethylene glycol di(meth)acrylate, tetraethylene glycol di(meth)acrylate, polyethylene glycol (400) di(meth)acrylate, and polyethylene glycol (600) diacrylate, propylene glycol di(meth)acrylate, polypropylene glycol di(meth)acrylates such as dipropylene glycol di(meth)acrylate and tripropylene glycol di(meth)acrylate, alkylene glycol di(meth)acrylates such as butylene glycol di(meth)acrylate, pentyl glycol di(meth)acrylate, neopentyl glycol di(meth)acrylate, hydroxypivalyl hydroxypivalate di(meth)acrylate, hydroxypivalyl hydroxypivalate dicaprolactonate di(meth)acrylate, 1,6-hexanediol di(meth)acrylate, 1,2-hexanediol di(meth)acrylate, 1,5-hexanediol di(meth)acrylate, 2,5-hexanediol di(meth)acrylate, 1,7-heptanediol di(meth)acrylate, 1,8-octanediol di(meth)acrylate, 1,2-octanediol di(meth)acrylate, 1,9-nonanediol di(meth)acrylate, 1,10-decanediol di(meth)acrylate, 1,2-decanediol di(meth)acrylate, 1,12-dodecanediol di(meth)acrylate, 1,2-dodecanediol di(meth)acrylate, 1,14-tetradecanediol di(meth)acrylate, 1,2-tetradecanediol di(meth)acrylate, 1,16-hexadecanediol di(meth)acrylate, 1,2-hexadecanediol di(meth)acrylate, 2-methyl-2,4-pentanediol di(meth)acrylate, 3-methyl-1,5-pentanediol di(meth)acrylate, 2-methyl-2-propyl-1,3-propanediol di(meth)acrylate, 2,4-dimethyl-2,4-pentanediol di(meth)acrylate, 2,2-diethyl-1,3-propanediol di(meth)acrylate, 2,2,4-trimethyl-1,3-pentanediol di(meth)acrylate, dimethyloloctane di(meth)acrylate, 2-ethyl-1,3-hexanediol di(meth)acrylate, 2,5-dimethyl-2,5-hexanediol di(meth)acrylate, 2-methyl-1,8-octanediol di(meth)acrylate, 2-butyl-2-ethyl-1,3-propanediol di(meth)acrylate, 2,4-diethyl-1,5-pentanediol di(meth)acrylate, tricyclodecanedimethylol di(meth)acrylate, tricyclodecanedimethylol dicaprolactonate di(meth)acrylate, cyclohexanedimethanol di(meth)acrylate, and dicyclopentanyl di(meth)acrylate, bisphenol A tetraethylene oxide adduct di(meth)acrylate, bisphenol F tetraethylene oxide adduct di(meth)acrylate, bisphenol S tetraethylene oxide adduct di(meth)acrylate, hydrogenated bisphenol A tetraethylene oxide adduct di(meth)acrylate, hydrogenated bisphenol F tetraethylene oxide adduct di(meth)acrylate, hydrogenated bisphenol A di(meth)acrylate, hydrogenated bisphenol F di(meth)acrylate, bisphenol A tetraethylene oxide adduct dicaprolactonate di(meth)acrylate, bisphenol F tetraethylene oxide adduct dicaprolactonate di(meth)acrylate, and the like, and di(meth)acrylates of polyhydric alcohols such as glycerol, pentaerythritol, diglycerol, ditrimethylolpropane, and dipentaerythritol. Among these polyfunctional (meth)acrylate-based compounds, polyalkylene glycol di(meth)acrylates are preferred, dialkylene glycol di(meth)acrylates are more preferred, and dipropylene glycol di(meth)acrylate is even more preferred.

Other examples include trifunctional monomers such as glycerol tri(meth)acrylate, trimethylolpropane tri(meth)acrylate, trimethylolpropane tricaprolactonate tri(meth)acrylate, trimethylolethane tri(meth)acrylate, trimethylolhexane tri(meth)acrylate, trimethyloloctane tri(meth)acrylate, and pentaerythritol tri(meth)acrylate; 3EO (ethylene oxide)-modified derivatives, 6EO-modified derivatives, and 9EO-modified derivatives thereof (e.g., EO-modified trimethylolpropane tri(meth)acrylate, 3EO-modified trimethylolpropane tri(meth)acrylate, 3EO-modified trimethylolethane tri(meth)acrylate, and 3EO-modified trimethylolhexane tri(meth)acrylate); and tetra- or higher-functional monomers such as trimethylolpropane tetra(meth)acrylate, pentaerythritol tetra(meth)acrylate, pentaerythritol tetracaprolactonate tetra(meth)acrylate, diglycerol tetra(meth)acrylate, ditrimethylolpropane tetra(meth)acrylate, ditrimethylolpropane tetracaprolactonate tetra(meth)acrylate, ditrimethylolethane tetra(meth)acrylate, ditrimethylolbutane tetra(meth)acrylate, ditrimethylolhexane tetra(meth)acrylate, ditrimethyloloctane tetra(meth)acrylate, dipentaerythritol penta(meth)acrylate, dipentaerythritol hexa(meth)acrylate, tripentaerythritol hexa(meth)acrylate, tripentaerythritol hepta(meth)acrylate, tripentaerythritol octa(meth)acrylate, and tripentaerythritol polyalkylene oxide hepta(meth)acrylate. Among these, for example, trimethylolpropane triacrylate (TMPTA; trifunctional), ditrimethylolpropane tetraacrylate (DITMPTA; tetrafunctional), dipentaerythritol hexaacrylate (DPHA; hexafunctional), and hexanediol diacrylate (HDDA; difunctional) can be used.

### -Vinyl Ether Group-Containing (Meth)acrylate-Based Compound-

Examples of vinyl ether group-containing (meth)acrylate-based compounds include 2-vinyloxyethyl (meth)acrylate, 3-vinyloxypropyl (meth)acrylate, 1-methyl-2-vinyloxyethyl (meth)acrylate, 2-vinyloxypropyl (meth)acrylate, 4-vinyloxybutyl (meth)acrylate, 1-methyl-3-vinyloxypropyl (meth)acrylate, 1-vinyloxymethylpropyl (meth)acrylate, 2-methyl-3-vinyloxypropyl (meth)acrylate, 3-methyl-3-vinyloxypropyl (meth)acrylate, 1,1-dimethyl-2-vinyloxyethyl (meth)acrylate, 3-vinyloxybutyl (meth)acrylate, 1-methyl-2-vinyloxypropyl (meth)acrylate, 2-vinyloxybutyl (meth)acrylate, 4-vinyloxycyclohexyl (meth)acrylate, 5-vinyloxypentyl (meth)acrylate, 6-vinyloxyhexyl (meth)acrylate, 4-vinyloxymethylcyclohexylmethyl (meth)acrylate, 3-vinyloxymethylcyclohexylmethyl (meth)acrylate, 2-vinyloxymethylcyclohexylmethyl (meth)acrylate, p-vinyloxymethylphenylmethyl (meth)acrylate, m-vinyloxymethylphenylmethyl (meth)acrylate, o-vinyloxymethylphenylmethyl (meth)acrylate, 2-(vinyloxyisopropoxy)ethyl (meth)acrylate, 2-(vinyloxyethoxy)propyl (meth)acrylate, 2-(vinyloxyethoxy)isopropyl (meth)acrylate, 2-(vinyloxyisopropoxy)propyl (meth)acrylate, 2-(vinyloxyisopropoxy)isopropyl (meth)acrylate, 2-(vinyloxyethoxyethoxy)ethyl (meth)acrylate, 2-(vinyloxyethoxyisopropoxy)ethyl (meth)acrylate, 2-(vinyloxyisopropoxyethoxy)ethyl (meth)acrylate, and 2-(vinyloxyisopropoxyisopropoxy)ethyl (meth)acrylate.

### ((Meth)acrylic Acid Amide-Based Compound)

The adhesive active-energy-ray-curable inkjet ink composition of the present invention may or may not contain a (meth)acrylic acid amide-based compound. Examples of (meth)acrylic acid amide-based compounds include acryloylmorpholine, (meth)acrylamide, N-isopropyl(meth)acrylamide, and N-(2-hydroxyethyl) (meth)acrylamide. In particular, acryloylmorpholine is preferred.

### <Difunctional Acrylate Oligomer Including Amine-Modified Photopolymerizable Oligomer>

The difunctional acrylate oligomer including the amine-modified photopolymerizable oligomer is the amine-modified photopolymerizable oligomer alone or a mixture of the amine-modified photopolymerizable oligomer with another difunctional acrylate oligomer. These oligomers preferably have a weight average molecular weight of 500 to 3,000 and a viscosity of 4,000 mPa ·s or less.

The amine-modified photopolymerizable oligomer is preferably an amine-modified photopolymerizable oligomer having two photopolymerizable functional groups and an amino group in the molecule thereof.

In particular, an amine-modified photopolymerizable oligomer having two (meth)acryloyl groups and two amino groups in the molecule thereof is preferred.

The amine value is preferably 130 to 142 mg KOH/g. In this embodiment, the amine value refers to an amine value per gram of solid and is a value obtained by performing a measurement using a 0.1 N hydrochloric acid aqueous solution by potentiometric titration (e.g., COMTITE (AUTO TITRATOR COM-900, BURET B-900, TITSTATION K-900), manufactured by HIRANUMA Co., Ltd.) and converting the measured value into potassium hydroxide equivalent.

The acrylated amine compound having two (meth)acryloyl groups and two amino groups in the molecule thereof is preferably an acrylated amine compound obtained by reacting a difunctional (meth)acrylate with an amine compound. Examples of difunctional (meth)acrylates include alkylene glycol di(meth)acrylates such as 1,4-butanediol di(meth)acrylate, 1,6-hexanediol di(meth)acrylate, 1,9-nonanediol di(meth)acrylate, propylene glycol di(meth)acrylate, 1,3-butylene glycol di(meth)acrylate, and neopentyl glycol di(meth)acrylate, bisphenol alkylene oxide adduct di(meth)acrylates such as bisphenol A ethylene oxide adduct di(meth)acrylate, bisphenol F ethylene oxide adduct di(meth)acrylate, bisphenol S ethylene oxide adduct di(meth)acrylate, thiobisphenol ethylene oxide adduct di(meth)acrylate, and brominated bisphenol A ethylene oxide adduct di(meth)acrylate, polyalkylene glycol di(meth)acrylates such as polyethylene glycol di(meth)acrylate and polypropylene glycol di(meth)acrylate, and hydroxypivalic acid neopentyl glycol ester di(meth)acrylate. Among these, the difunctional (meth)acrylate is preferably 1,6-hexanediol di(meth)acrylate.

Examples of amine compounds include monofunctional amine compounds such as benzylamine, phenethylamine, ethylamine, n-propylamine, isopropylamine, n-butylamine, isobutylamine, n-pentylamine, isopentylamine, n-hexylamine, cyclohexylamine, n-heptylamine, n-octylamine, 2-ethylhexylamine, n-nonylamine, n-decylamine, n-dodecylamine, n-tetradecylamine, n-hexadecylamine, and n-octadecylamine, and polyfunctional amine compounds such as diethylenetriamine, triethylenetetramine, tetraethylenepentamine, 1,6-hexamethylenediamine, 1,8-octamethylenediamine, 1,12-dodecamethylenediamine, o-phenylenediamine, p-phenylenediamine, m-phenylenediamine, o-xylylenediamine, p-xylylenediamine, m-xylylenediamine, menthanediamine, bis(4-amino-3-methylcyclohexyl)methane, isophoronediamine, 1,3-diaminocyclohexane, and spiroacetal-based diamines. The amine compound may also be a high-molecular-weight-type polyfunctional amine compound such as polyethyleneimine, polyvinylamine, or polyallylamine.

Examples of acrylated amine compound oligomers having two photopolymerizable functional group and two amino groups in the molecule thereof that can be used include CN371 NS, CN549 NS, CN550, CN551 NS, CN371, CN373, CN383, CN386, CN501, CN503, and CN3755 (Arkema Sartomer), EBECRYL LEO 10101, EBECRYL LEO 10103, EBECRYL 80, EBECRYL 81, EBECRYL 83, EBECRYL 7100, EBECRYL 84, and EBECRYL P115 (Daicel-Allnex Ltd.), ETERCURE 63922 (Eternal), Laromer PO 83F, Laromer PO 84F, Laromer LR8946, Laromer LR8956, Laromer LR8996, and Laromer LR8894 (BASF), AgiSyn 001, 002, 003, 008, 701, 701P, 703, and 703TF (DSM), Photomer 4771, 4775, 4967, 5096, 5662, and 5930 (Cognis), PHOTOCRYL A104 and Miramer AS1000 (MIWON), and Doublecure EPD, OPD, 115, 225, and 645 and PolyQ 222, 226, 224, and 101 (Double Bond Chemicals).

The content of the amine-modified photopolymerizable oligomer relative to the total amount of adhesive active-energy-ray-curable inkjet ink composition is 0.5% by mass or more, preferably 1.0% by mass or more, more preferably 2.5% by mass or more, even more preferably 4.0% by mass or more, and is 25.0% by mass or less, preferably 24.0% by mass or less, more preferably 23.0% by mass or less, even more preferably 22.0% by mass or less.

When the content of the amine-modified photopolymerizable oligomer is less than 0.5% by mass, metal halide curability and repeelability will be poor.

Among difunctional acrylate oligomers, a polyurethane oligomer and/or a polyurethane polyurea oligomer prepared using, as a raw material, a polyester polyol obtained using a plant-derived dicarboxylic acid component or diol component can also be used as an oligomer other than the above amine-modified photopolymerizable oligomer from an environmental viewpoint.

A vegetable oil-modified polyfunctional polyester acrylate oligomer can be used without limitation as long as the vegetable oil-modified polyester acrylate oligomer has 2 to 6 acrylate groups in the molecule thereof.

Among these, for example, one or more types selected from the group consisting of EBECRYL 450, 452, 820, and 1622 and tall oil fatty acid-modified hexafunctional polyester acrylates (e.g., AgiSyn 716) are preferably used since the biomass content of the adhesive active-energy-ray-curable inkjet ink composition can be increased.

These oligomers can be used alone or in a combination of two or more types.

### [Other Polymerizable Compounds]

### -Unsaturated Carboxylic Acid-Based Compound-

Examples of unsaturated carboxylic acid-based compounds include unsaturated carboxylic acids such as (meth)acrylic acid, itaconic acid, crotonic acid, isocrotonic acid, fumaric acid, and maleic acid as well as salts thereof and acid anhydrides thereof.

### (Vinyl Compound)

In addition to the above photopolymerizable component, a vinyl compound can be added to the adhesive active-energy-ray-curable inkjet ink composition of the present invention. Such vinyl compounds include vinyl compounds having no structure derived from (meth)acrylic acid, such as N-vinylpyrrolidone, N-vinylformamide, N-vinylacetamide, N-vinyl-2-caprolactam, N-vinylcarbazole, and

### vinylmethyloxazolidinone.

When the vinyl compound is contained, the content of the vinyl compound relative to the total amount of photopolymerizable component is preferably 1.0% by mass or more, more preferably 3.0% by mass or more, even more preferably 5.0% by mass or more, and is preferably 10.0% by mass or less, more preferably 8.0% by mass or less, even more preferably 6.0% by mass or less.

### -Styrene-Based Compound-

Examples of styrene-based compounds include styrene, vinyltoluene, p-hydroxystyrene, p-chlorostyrene, p-bromostyrene, p-methylstyrene, p-methoxystyrene, p-t-butoxystyrene, p-t-butoxycarbonylstyrene, p-t-butoxycarbonyloxystyrene, 2,4-diphenyl-4-methyl-1-pentene, and divinylbenzene.

### -Allylate-Based Compound-

Examples of allylate-based compounds include allyl glycidyl ether, diallyl phthalate, triallyl trimellitate, and triallylate isocyanurate.

### -Other Compounds Having One Ethylenically Unsaturated Bond-

As compounds having one ethylenically unsaturated bond, "other compounds having one ethylenically unsaturated bond" other than the compounds described above can be used.

Examples of such compounds include vinyl acetate, vinyl monochloroacetate, vinyl benzoate, vinyl pivalate, vinyl butyrate, vinyl laurate, divinyl adipate, vinyl crotonate, vinyl 2-ethylhexanoate, three-membered ring compounds (e.g., vinylcyclopropanes, 1-phenyl-2-vinylcyclopropanes, 2-phenyl-3-vinyloxiranes, and 2,3-divinyloxiranes), and cyclic ketene acetals (e.g., 2-methylene-1,3-dioxepane, dioxolanes, 2-methylene-4-phenyl-1,3-dioxepane, 4,7-dimethyl-2-methylene-1,3-dioxepane, and 5,6-benzo-2-methylene-1,3-dioxepane).

### (Polymer)

A polymer serving as a curable resin having an ethylenically unsaturated bond is a component to be reacted to a higher molecular weight together with the above monomers and oligomers and is a component that contributes to an improvement in the viscoelasticity of the ink composition since the polymer has a high molecular weight before irradiation with an active energy ray such as ultraviolet light.

Such a polymer is used in the form of, for example, a solution or dispersion in a monomer that is a liquid with low viscosity. Examples of polymers having an ethylenically unsaturated bond include polydiallyl phthalate, acrylic resins having an unreacted unsaturated group, and acrylic-modified phenol resins. Among these, polydiallyl phthalate can be preferably used since it has particularly excellent compatibility with the above monomers and oligomers.

The polymer having an ethylenically unsaturated bond need not be contained; when the polymer having an ethylenically unsaturated bond is contained, the content of the polymer having an ethylenically unsaturated bond relative to the total amount of photopolymerizable component is preferably 0% to 50.0% by mass, more preferably 0% to 30.0% by mass, even more preferably 0% to 20.0% by mass.

The photopolymerization initiator that may be contained in the ink composition is not particularly limited, and examples of photopolymerization initiators that can be used include benzophenone, diethylthioxanthone, 2-methyl-1-(4-methylthio)phenyl-2-morpholinopropan-1-one, 4-benzoyl-4'-methyldiphenyl sulfide, 1-chloro-4-propoxythioxanthone, isopropylthioxanthone, 2-hydroxy-2-methyl-1-phenylpropan-1-one, 1-hydroxycyclohexyl phenyl ketone, bis-2,6-dimethoxybenzoyl-2,4,4-trimethylpentylphosphine oxide, 1-[4-(2-hydroxyethoxy)-phenyl]-2-hydroxy-2-methyl-1-propan-1-one, 2,2-dimethyl-2-hydroxyacetophenone, 2,2-dimethoxy-2-phenylacetophenone, 2,4,6-trimethylbenzyl-diphenylphosphine oxide, and 2-benzyl-2-dimethylamino-1-(morpholinophenyl)-butan-1-one. Such photopolymerization initiators are commercially available, for example, under trade names such as Irgacure 907, Irgacure 369, Irgacure 184, Irgacure 379, Irgacure 819, and TPO from BASF and under trade names such as DETX from Lamberti. A plurality of photopolymerization initiator may be used in combination.

The ink composition of the present invention may or may not contain the photopolymerization initiator.

When ultraviolet light (UV lamp (e.g., a metal halide)) or ultraviolet light (light-emitting diode (LED)) is used as a light source, the content of the photopolymerization initiator in the ink composition may be 0% by mass, but preferably 0.5% by mass or more, more preferably 5.0% by mass or more, and the content of the photopolymerization initiator is preferably 15.0% by mass or less, more preferably 10.0% by mass or less. When the photopolymerization initiator is contained and the content thereof falls within the above range, an ink composition with sufficient curability and internal curability can be obtained at low cost.

When the active energy ray used for irradiation is an electron beam, the photopolymerization initiator may or may not be used.

### (Sensitizer)

The ink composition can contain a sensitizer. When the sensitizer is contained, the ink composition can exhibit, for example, improved curability for ultraviolet light from a light-emitting diode (LED) as a light source, and has light absorption properties for ultraviolet light at a longer wavelength around 400 nm if necessary so that a sensitization function for a curing reaction is readily exhibited with light at that wavelength. The phrase "a sensitization function is exhibited with light at a wavelength around 400 nm" refers to having light absorption properties in a wavelength range around 400 nm. When such a sensitizer is used, the ink composition of this embodiment can exhibit improved LED curability.

The sensitizer is preferably an anthracene-based sensitizer, a thioxanthone-based sensitizer, or the like, more preferably a thioxanthone-based sensitizer. Photosensitizers may be used in combination. Specific examples of photosensitizers include anthracene-based sensitizers such as 9,10-dibutoxyanthracene, 9,10-diethoxyanthracene, 9,10-dipropoxyanthracene, and 9,10-bis(2-ethylhexyloxy)anthracene and thioxanthone-based sensitizers such as 2,4-diethylthioxanthone, 2-isopropylthioxanthone, and 4-isopropylthioxanthone. Typical examples of commercially available products include anthracene-based sensitizers such as DBA and DEA (manufactured by Kawasaki Kasei Chemicals Ltd.) and thioxanthone-based sensitizers such as DETX and ITX (manufactured by LAMBSON).

When the sensitizer is contained, the content of the sensitizer in the ink composition is preferably more than 0% by mass and 3.5% by mass or less. When the content of the sensitizer falls within the above range, the effect of the addition of the sensitizer to the ink composition is readily improved.

In the present invention, the adhesive active-energy-ray-curable inkjet ink composition may contain a pigment in advance as long as the pigment does not impair discharge property from an inkjet printing apparatus.

Examples of such pigments include color pigments, white pigments, and metal powders. As such pigments, those conventionally used in ink compositions, for example, the following organic and/or inorganic pigments, can be used without particular limitation.

The pigment preferably has an average particle size of 500 nm or less, more preferably 400 nm or less, even more preferably 350 nm or less. When the pigment has an average particle size of 500 nm or less, the adhesive active-energy-ray-curable inkjet ink composition can exhibit higher curability.

Examples of pigments include dye lake pigments, azo-based, benzimidazolone-based, phthalocyanine-based, quinacridone-based, anthraquinone-based, dioxazine-based, indigo-based, thioindigo-based, perylene-based, perinone-based, diketopyrrolopyrrole-based, isoindolinone-based, nitro-based, nitroso-based, flavanthrone-based, quinophthalone-based, pyranthrone-based, and indanthrone-based pigments, and various inorganic pigments.

Among these pigments, yellow pigments such as disazo yellow (Pigment Yellow 12, Pigment Yellow 13, Pigment Yellow 14, Pigment Yellow 17, and Pigment Yellow 1) and Hansa yellow, magenta pigments such as Brilliant Carmine 6B, Lake Red C, Watching Red, and quinacridone, cyan pigments such as phthalocyanine blue, phthalocyanine green, and alkali blue, and color pigments (including achromatic color pigments such as white and black pigments) such as titanium oxide, red iron oxide, antimony red, cadmium yellow, cobalt blue, Prussian blue, ultramarine, iron black, chromium oxide green, carbon black, and graphite, aluminum paste, metal powders such as bronze powder, and the like are given as examples.

### (Pigment Dispersant and Pigment Dispersion Resin)

When such a pigment is contained, a pigment dispersant and/or a pigment dispersion resin different from a surface conditioner may be added.

As the pigment dispersant, one or more types selected from the group consisting of known nonionic surfactants, anionic surfactants, cationic surfactants, and amphoteric surfactants can be used.

As the surfactants, for example, one or more types selected from the group consisting of silicone-based surfactants (e.g., polyether-modified silicone oil, polyester-modified polydimethylsiloxane, and polyester-modified methylalkylpolysiloxane), fluorine-based surfactants, oxyalkylene ether-based surfactants, acetylene glycol-based surfactants, phosphorus-based surfactants, sulfonic acid-based surfactants, and the like can be used.

As the pigment dispersion resin, one or more types selected from the group consisting of polymer dispersants (e.g., carbodiimide-based, polyester-based, polyamine-based, polyester amine-based, polyurethane-based, fatty acid amine-based, polyacrylate-based, polycaprolactone-based, polysiloxane-based, multibranched nonionic polymer-based, and ionic polymer-based dispersants) and the like can be used.

When the adhesive active-energy-ray-curable inkjet ink composition of the present invention contains the pigment dispersant or the pigment dispersion resin, the pigment dispersant or the pigment dispersion resin is preferably contained in an amount of 1 to 200 parts by mass, with the total amount of pigment used being 100 parts by mass.

### (Other Components)

As other components, the adhesive active-energy-ray-curable inkjet ink composition of the present invention may contain various additives such as surfactants, polymerization inhibitors, preservatives, ultraviolet absorbers, antioxidants, defoamers, fungicides, rust inhibitors, thickeners, humectants, and pH adjusters. In addition, a resin that is not curable may or may not be added. In addition, a solvent may or may not be contained.

When the ink composition of the present invention has stickiness upon curing, the ink composition of the present invention may or may not contain a tackifier.

### <Surface Conditioner (Surfactant)>

In the adhesive active-energy-ray-curable inkjet ink composition of the present invention, known surfactants for use in photocurable inkjet ink compositions can be used as a surface conditioner without particular limitation depending on the inkjet head used and the material to be printed, including, for example, nonionic surfactants, cationic surfactants, anionic surfactants, and betaine surfactants. Specific examples of such surfactants include silicone-based surfactants such as polyether-modified silicone oil, polyester-modified polydimethylsiloxane, and polyester-modified methylalkylpolysiloxane, fluorine-based surfactants, and acetylene-based surfactants. These surfactants can be used alone or in a combination of two or more types. These surfactants may be the same as or different from the pigment dispersants described above.

Examples of silicone-based surfactants include BYK-307, BYK-315N, BYK-331, BYK-333, BYK-347, BYK-348, BYK-349, BYK-345, BYK-377, BYK-378, BYK-3455, and BYK-UV3500 (BYK-Chemie).

Examples of fluorine-based surfactants include F-410, F-444, and F-553 (DIC Corporation) and FS-65, FS-34, FS-35, FS-31, and FS-30 (DuPont).

Examples of acetylene-based surfactants include Dynol 607, Dynol 609, Olfine E1004, Olfine E1010, Olfine E1020, Olfine PD-001, Olfine PD-002W, Olfine PD-004, Olfine PD-005, Olfine EXP.4001, Olfine EXP.4200, Olfine EXP.4123, and Olfine EXP.4300 (Nissin Chemical Co., Ltd.) and Surfynol 104E, Surfynol 104H, Surfynol 104A, Surfynol 104BC, Surfynol 104DPM, Surfynol 104PA, Surfynol 104PG-50, Surfynol 420, Surfynol 440, and Surfynol 465 (EVONIK).

The proportion of the surfactant in the adhesive active-energy-ray-curable inkjet ink composition of the present invention is preferably 0.005% by mass or more, more preferably 0.01% by mass or more, from the viewpoint of decreasing the surface tension of the ink composition and improving the stability of ejection from an inkjet head, and is preferably 1.5% by mass or less, more preferably 1.0% by mass or less, from the viewpoint of reducing formation of bubbles in the ink composition during mixing and improving the ejection stability.

When the surface conditioner is contained, the content of the surface conditioner is not particularly limited and is an amount such that the adhesive active-energy-ray-curable inkjet ink composition has a surface tension of 32.0 mN/m or less. When the surface tension is more than 32.0 mN/m, poor image quality occurs due to insufficient wettability on substrates.

### (Organic Solvent)

The ink composition of the present invention may or may not contain an organic solvent. When the organic solvent is used, examples of organic solvents used include those common to ink compositions for surface printing and shrinking, for example, alcohol-based solvents such as methanol, ethanol, isopropanol, normal propanol, butanol, isobutanol, and tert-butanol, aromatic hydrocarbon-based solvents such as toluene and xylene, aliphatic hydrocarbon-based solvents such as hexane, cyclohexane, methylcyclohexane, and ethylcyclohexane, ketone-based solvents such as acetone, methyl ethyl ketone, methyl isobutyl ketone, and cyclohexanone, ester-based solvents such as ethyl acetate, n-propyl acetate, isopropyl acetate, butyl acetate, isobutyl acetate, sec-butyl acetate, and tert-butyl acetate, glycol-based solvents such as ethylene glycol monomethyl ether, ethylene glycol monoethyl ether, ethylene glycol dimethyl ether, ethylene glycol monobutyl ether, propylene glycol monomethyl ether, propylene glycol monoethyl ether, propylene glycol monopropyl ether, and propylene glycol monobutyl ether, and esters thereof. Typical examples of esters include acetates such as ethylene glycol monomethyl ether acetate, ethylene glycol monoethyl ether acetate, ethylene glycol monobutyl ether acetate, diethylene glycol monoethyl ether acetate, diethylene glycol monobutyl ether acetate, propylene glycol monomethyl ether acetate, and propylene glycol monoethyl ether acetate. These can be used alone or in a mixture of two or more types.

From the viewpoint of environmental issues, it is preferred to use a mixed solvent of an ester-based organic solvent, an alcohol-based organic solvent, and a ketone-based organic solvent, or a mixed solvent of an ester-based organic solvent and an alcohol-based organic solvent, which is more suitable for addressing environmental issues.

A known polymerization inhibitor may be contained in order to prevent polymerization of the adhesive active-energy-ray-curable inkjet ink composition during storage. As the polymerization inhibitor, phenol compounds such as hydroquinone and butylhydroxytoluene, tocopherol acetate, nitrosamine, benzotriazole, and hindered amines can be given as preferred examples, and in particular, hydroquinone can be given as a more preferred example. The addition of such a polymerization inhibitor can inhibit thickening of the ink composition due to proceeding of a polymerization reaction during storage. As the content of the polymerization inhibitor in the ink composition, about 0.1 to 1.0 part by mass can be given as an example, with the total amount of photopolymerizable component being 100 parts by mass.

### (Ultraviolet Absorber)

Examples of ultraviolet absorbers include benzophenone-based ultraviolet absorbers, benzotriazole-based ultraviolet absorbers, salicylate-based ultraviolet absorbers, hydroxyphenyltriazine-based ultraviolet absorbers, cyanoacrylate-based ultraviolet absorbers, and nickel complex salt-based ultraviolet absorbers.

### (Antioxidant)

Examples of antioxidants include phenol-based antioxidants, amine-based antioxidants, sulfur-based antioxidants, and phosphorus-based antioxidants.

### (Defoamer)

Examples of defoamers include silicone-based defoamers and Pluronic (registered trademark)-type defoamers.

The adhesive active-energy-ray-curable inkjet ink composition of the present invention has a viscosity at 25°C of 50.0 mPa·s or less, preferably 35.0 mPa·s or less, more preferably 30.0 mPa·s or less, even more preferably 25.0 mPa·s or less, and preferably 10.0 mPa·s or more, more preferably 13.0 mPa·s or more. A viscosity modifier or the like is added to the ink composition if necessary. The viscosity described in the present specification is the viscosity measured at 25°C and 10 rpm with an E-type viscometer (RE 100L type viscometer, manufactured by Toki Sangyo Co., Ltd.).

In addition, the adhesive active-energy-ray-curable inkjet ink composition of the present invention has a surface tension at 25°C of 32.0 mN/m or less.

### <Method for Preparing Adhesive Active-Energy-Ray-Curable Inkjet Ink Composition>

Next, a method for manufacturing the adhesive active-energy-ray-curable inkjet ink composition of the present invention using these materials will be described

The adhesive active-energy-ray-curable inkjet ink composition of the present invention can be prepared by, for example, mixing together the individual components while stirring and/or dispersing them using a disperser such as a wet circulation mill, a bead mill, a ball mill, a sand mill, an attritor, a roll mill, a DCP mill, an agitator, a Henschel mixer, a colloid mill, an ultrasonic homogenizer, or a high-pressure homogenizer (e.g., Microfluidizer, Nanomizer, Altimizer, Geanus PY, or DeBEE 2000), and if necessary, adjusting the viscosity of the adhesive active-energy-ray-curable inkjet ink composition. The adhesive active-energy-ray-curable inkjet ink composition may also be prepared by mixing the pigment with the above pigment dispersant and the above photopolymerizable monomer to obtain a base ink composition in advance and then adding the remainder of the above components to the base ink composition so as to obtain the desired composition.

### EXAMPLES

The present invention will be more specifically described with reference to the examples below, although the present invention is not limited only to these examples. Unless otherwise specified, "%" means "% by mass", and "parts" means "parts by mass".

Ink compositions of Examples and Comparative Examples shown in Tables 1 and 2 below were prepared, and test results for the individual ink compositions are shown in Tables 1 and 2.
CN371 NS: amine-modified (meth)acrylate oligomer (an acrylated amine compound having two photopolymerizable functional groups and two amino groups in the molecule thereof) (Arkema Sartomer)
CN966J75: aliphatic urethane acrylate oligomer (a compound having two photopolymerizable functional groups in the molecule thereof) (Arkema Sartomer)
HDDA: 1,6-hexanediol diacrylate
ACMO: acryloylmorpholine (Tg = 145°C)
TPO: 2,4,6-trimethylbenzoyl-diphenylphosphine oxide
TPOL: ethylphenyl (2,4, 6-trimethylbenzoyl) phosphinate Omnirad 184: 1-hydroxycyclohexyl-phenyl-ketone
HQ: hydroquinone
BYK-UV3500: polyether-modified acryloyl group-containing polydimethylsiloxane (100% solid) (BYK-Chemie)

### <Test Methods>

### (Viscosity)

The viscosity (mPa·s) of each of the adhesive active-energy-ray-curable inkjet ink compositions obtained in the Examples and the Comparative Examples was measured at a temperature of 25°C and a rotor rotation speed of 10 rpm with an E-type viscometer (trade name: RE 100L type viscometer, manufactured by Toki Sangyo Co., Ltd.).

### (Static Surface Tension)

The static surface tension (mN/m) of each of the adhesive active-energy-ray-curable inkjet ink compositions obtained in the Examples and the Comparative Examples was measured at a temperature of 25°C with a dynamic wettability tester (trade name: WET-6000, manufactured by Rhesca Co., Ltd.).

### (Metal Halide Lamp Curability)

Each of the adhesive active-energy-ray-curable inkjet ink compositions obtained in the Examples and the Comparative Examples was applied to a surface of a polyethylene terephthalate film (E5100, manufactured by Toyobo Co., Ltd.; hereinafter referred to as "PET film") with a No. 4 bar coater.

The number of passes to curing was then evaluated by irradiation with a metal halide lamp at 75 mJ/cm².

In the evaluation, the number of passes after which no trace was left upon rubbing with a cotton swab was determined as completion of curing.
∘: 3 passes or less
×: 4 passes or more

### (LED Curability)

Each of the adhesive active-energy-ray-curable inkjet ink compositions obtained in the Examples and the Comparative Examples was applied to a surface of a PET film with a No. 4 bar coater.

The coating was then irradiated with light at a wavelength of 395 nm using an LED lamp manufactured by Phoseon Technology at an integrated light intensity of 80 mJ/cm2 and was evaluated according to the following evaluation criteria.
∘: Rubbing with a cotton swab did not remove the ink coating
×: Rubbing with a cotton swab removed the ink coating

### (Decorability)

Each of the adhesive active-energy-ray-curable inkjet ink compositions obtained in the Examples and the Comparative Examples was applied to a surface of a PET film with a No. 4 bar coater.

The coating was then cured with a metal halide lamp, and a pearl pigment (MagnaPearl 3000 (BASF)) was sprinkled over the cured coating.

Excess powder was removed with a rubber spatula, and the pearl pigment that adhered to the ink-coated portion was observed under a light microscope. When the surface of the cured coating has this decorability, it can be said to have tackiness.
∘: The particles adhered uniformly to the ink-coated portion.
×: There were positions where no particles adhered.

### (Repeelability) (if the repeelability is insufficient, the powdered component is displaced or comes off after adhesion, which results in an unsatisfactory design.)

Each of the adhesive active-energy-ray-curable inkjet ink compositions obtained in the Examples and the Comparative Examples was applied to a surface of a PET film with a No. 4 bar coater.

The coating was then cured with a metal halide lamp, and a PET film was laminated on the cured coating.

The two laminated PET films were peeled and relaminated twice. After the third peeling operation, the appearance of the coating was observed.
∘: There was no change in appearance.
Δ: There was deformation only in the surface of the coating.
×: The coating came off or exhibited cohesive failure.

**[Table 1]**

| | Example | | | | | | | |
|---|---|---|---|---|---|---|---|---|
| | 1 | 2 | 3 | 4 | 5 | 6 | 7 | 8 |
| CN371 NS | 10 | 10 | 10 | 10 | 10 | 10 | 10 | 2.5 |
| CN966J75 | | | | | | | 10 | |
| 4-Hydroxybutyl acrylate | 77.3 | 30 | 77.3 | 62.3 | 67.3 | 55 | 67.3 | 62.3 |
| Hydroxypropyl acrylate | | 30 | | | | | | |
| Lauryl acrylate | | 17.3 | | 15 | | | | 7.5 |
| Ethylcarbitol acrylate | | | | | 10 | | | |
| Phenoxyethyl acrylate | | | | | | 22.3 | | |
| HDDA | | | | | | | | 5 |
| ACMO | | | | | | | | 10 |
| TPO | 10 | 10 | | 10 | 10 | 10 | 10 | 10 |
| TPOL | | | 10 | | | | | |
| Omnirad 184 | 2 | 2 | 2 | 2 | 2 | 2 | 2 | 2 |
| HQ | 0.2 | 0.2 | 0.2 | 0.2 | 0.2 | 0.2 | 0.2 | 0.2 |
| BYK-UV3500 | 0.5 | 0.5 | 0.5 | 0.5 | 0.5 | 0.5 | 0.5 | 0.5 |
| Total | 100 | 100 | 100 | 100 | 100 | 100 | 100 | 100 |
| Ink viscosity | 18 | 14 | 17 | 15 | 15 | 25 | 22 | 11 |
| Static surface tension | 22.5 | 22.5 | 22.5 | 22.5 | 22.5 | 22.5 | 22.5 | 22.5 |
| Discharge property | ○ | ○ | ○ | ○ | ○ | ○ | ○ | ○ |
| Metal halide lamp curability | 2P | 2P | 2P | 2P | 2P | 2P | 2P | 2P |
| LED curability | ○ | ○ | ○ | ○ | ○ | ○ | ○ | ○ |
| Decorability | ○ | ○ | ○ | ○ | ○ | ○ | ○ | ○ |
| Repeelability | ○ | ○ | ○ | ○ | ○ | ○ | ○ | ○ |

**[Table 2]**

| | Comparative Example | | | | | | |
|---|---|---|---|---|---|---|---|
| | 1 | 2 | 3 | 4 | 5 | 6 | 7 |
| CN371 NS | 10 | | | 10 | 10 | 30 | 10 |
| CN966J75 | | | 20 | | | | |
| 4-Hydroxybutyl acrylate | | 87.3 | 52.3 | 37.3 | 47.3 | 37.3 | 62.8 |
| Hydroxypropyl acrylate | | | | | | | |
| Lauryl acrylate | | | 15 | 15 | | 15 | 15 |
| Ethylcarbitol acrylate | 77.3 | | | | | | |
| Phenoxyethyl acrylate | | | | | | | |
| HDDA | | | | 25 | | 5 | |
| ACMO | | | | | 30 | | |
| TPO | 10 | 10 | 10 | 10 | 10 | 10 | 10 |
| TPOL | | | | | | | |
| Omnirad 184 | 2 | 2 | 2 | 2 | 2 | 2 | 2 |
| HQ | 0.2 | 0.2 | 0.2 | 0.2 | 0.2 | 0.2 | 0.2 |
| BYK-UV3500 | 0.5 | 0.5 | 0.5 | 0.5 | 0.5 | 0.5 | |
| Total | 100 | 100 | 100 | 100 | 100 | 100 | 100 |
| Ink viscosity | 12 | 10 | 20 | 13 | 24 | >50 | 15 |
| Static surface tension | 22.5 | 22.5 | 22.5 | 22.5 | 22.5 | 22.5 | 33.5 |
| Discharge property | ○ | ○ | ○ | ○ | ○ | × | ○ |
| Metal halide lamp curability | 3P | 5P | 5P | 3P | 2P | 1P | 3P |
| LED curability | ○ | ○ | ○ | ○ | ○ | ○ | ○ |
| Decorability | ○ | ○ | ○ | × | × | × | ○ |
| Repeelability | × | × | × | ○ | ○ | ○ | Δ |

The Examples according to the present invention showed excellent discharge property, metal halide lamp curability, LED curability, decorability, and repeelability. In contrast, Comparative Example 1, in which the adhesive active-energy-ray-curable inkjet ink composition did not contain a monofunctional monomer having a hydroxy group and having a Tg of 0°C or lower, showed poor repeelability. Comparative Examples 2 and 3, in which the adhesive active-energy-ray-curable inkjet ink compositions did not contain a difunctional acrylate oligomer including an amine-modified photopolymerizable oligomer, showed poor metal halide curability and repeelability. Comparative Example 4, in which the content of a monofunctional monomer having a hydroxy group and having a Tg of 0°C or lower was small, showed poor decorability. Comparative Example 5, in which the content of a monofunctional monomer having a hydroxy group and having a Tg of 0°C or lower was slightly small, showed poor decorability. Comparative Example 6, in which the content of a difunctional acrylate oligomer including an amine-modified photopolymerizable oligomer was excessive and the viscosity was too high, showed poor discharge property and decorability. Comparative Example 7, in which the surface tension was too high, showed poor repeelability.

## Claims

1. A method for obtaining a powder adhesion printed material by causing a powder to adhere to a portion printed with an adhesive active-energy-ray-curable inkjet ink composition, wherein
the adhesive active-energy-ray-curable inkjet ink composition contains 50.0% to 85.0% by mass of a monofunctional monomer having a hydroxy group and having a Tg of 0°C or lower,
the adhesive active-energy-ray-curable inkjet ink composition contains 0.5% to 25.0% by mass of a difunctional acrylate oligomer including an amine-modified photopolymerizable oligomer, and
the adhesive active-energy-ray-curable inkjet ink composition has a viscosity at 25°C of 50 mPa·s or less and a surface tension at 25°C of 32.0 mN/m or less,
the method comprising, in order, the following steps (A) to (C):
step (A): a step of ejecting the adhesive active-energy-ray-curable inkjet ink composition from an inkjet printing apparatus onto a substrate to form an adhesive active-energy-ray-curable inkjet ink composition layer,
step (B): a step of irradiating the adhesive active-energy-ray-curable inkjet ink composition layer formed in step (A) with an active energy ray to cure the ink composition layer, and
step (C): a step of sprinkling a powder over the cured ink composition layer obtained in step (B) to cause the powder to adhere to the adhesive active-energy-ray-curable inkjet ink composition layer, thereby obtaining a powder adhesion printed material.

2. The method for obtaining a powder adhesion printed material by causing a powder to adhere to a printed portion according to Claim 1, comprising, as step (D) after step (C), a step of removing powder that has not adhered to a surface of the cured ink composition layer from a surface of the substrate layer.

3. The method for obtaining a powder adhesion printed material by causing a powder to adhere to a printed portion according to Claim 1 or 2, wherein the active energy ray used in step (B) is light emitted from a light-emitting diode as a light source and having a wavelength of 360 to 420 nm.

4. The method for obtaining a powder adhesion printed material by causing a powder to adhere to a printed portion according to Claim 2, comprising, as step (E) after step (D), a step of applying an overcoat layer composition to the cured ink composition layer to which the powder has adhered.

5. The method for obtaining a powder adhesion printed material by causing a powder to adhere to a printed portion according to Claim 2, wherein the powder removed in step (D) is collected and reused in step (C).

6. The method for obtaining a powder adhesion printed material by causing a powder to adhere to a printed portion according to Claim 1 or 2, wherein the powder in step (C) is solid at room temperature.

7. The method for obtaining a powder adhesion printed material according to Claim 2, wherein a step of UV irradiation with a metal halide lamp is performed after step (D).

8. An adhesive active-energy-ray-curable inkjet ink composition, wherein
the adhesive active-energy-ray-curable inkjet ink composition contains 50.0% to 85.0% by mass of a monofunctional monomer having a hydroxy group and having a Tg of 0°C or lower,
the adhesive active-energy-ray-curable inkjet ink composition contains 0.5% to 25.0% by mass of a difunctional acrylate oligomer including an amine-modified photopolymerizable oligomer, and
the adhesive active-energy-ray-curable inkjet ink composition has a viscosity at 25°C of 50 mPa·s or less and a surface tension at 25°C of 32.0 mN/m or less.

9. The adhesive active-energy-ray-curable inkjet ink composition according to Claim 8, wherein
the adhesive active-energy-ray-curable inkjet ink composition contains less than 30.0% by mass of a monofunctional monomer having a Tg of 70°C or higher, and
the adhesive active-energy-ray-curable inkjet ink composition contains less than 25.0% by mass of a polyfunctional acrylate monomer having a molecular weight of less than 400.
